# EUROPÄISCHE PATENTANMELDUNG

(11) **EP 1 338 569 A1**
(43) Veröffentlichungstag der Anmeldung: **27.08.2003**
(21) Anmeldenummer: 02004015.0
(22) Anmeldetag: 22.02.2002
(51) Int. Cl.: C02F 1/64, C02F 1/58, C02F 1/00

(54) **Wasseraufbereitung durch katalytische Filtration**

(71) Anmelder: BWT Wassertechnik GmbH, 69198 Schriesheim (DE)
(72) Erfinder: Jürgen Johann, D-69226 Nussloch (DE); Schmidt Thomas, D-68519 Viernheim (DE); Bergmann Ralph, D-69469 Weinheim (DE)
(74) Vertreter: Zimmermann, Hans, Dr.

(57) **Zusammenfassung**

Im einem Verfahren zur Aufbereitung von Wasser, insbesondere Mineral- oder Tafelwasser, wird ein mindestens einen oxidierbaren Inhaltsstoff enthaltender Rohwasserstrom einem Filtermaterial (7), umfassend Braunstein mit einem Mangandioxid-Gehalt von mindestens 50 Gew.-%, zugeführt, mindestens ein Teil des mindestens einen Inhaltsstoffes aus dem Rohwasserstrom abgetrennt und auf dem Filtermaterial (7) zurückgehalten und nach Durchfluss des Rohwasserstroms durch das Filtermaterial (7) Reinwasser erhalten. Das mit dem Inhaltsstoff beladene Filtermaterial (7) wird nach Unterbruch der Rohwasserzufuhr mit einer wässrigen Lösung eines Oxidationsmittel regeneriert und anschliessend zur weiteren Gewinnung von Reinwasser aus Rohwasser verwendet. Dadurch wird ein Zudosieren von Oxidationsmitteln wie Ozon oder Chlor zum zu behandelnden Wasser vermieden.

## Beschreibung

Die Erfindung betrifft ein Verfahren zur Aufbereitung von Wasser, insbesondere Mineral- oder Tafelwasser, durch Abtrennung von Inhaltsstoffen, insbesondere Schwermetallen, Arsen und/oder Schwefelwasserstoff, an einem Mangandioxid-Filter.

Bekanntlich enthalten Quell- und Grundwässer häufig gelöste Schwermetallionen, wie Mn²⁺- und Fe²⁺-Ionen, die durch nachträgliche Ausfällung zu einer Beeinträchtigung des Geschmacks und/oder einer Verfärbung des Wassers führen können. Diese Wässer können auch andere unerwünschte Stoffe wie beispielweise Schwefelwasserstoff enthalten, der zu einer Geschmacks- und/oder Geruchsbeeinträchtigung führen kann. Zur Gewinnung von Trinkwasser, insbesondere Mineraloder Tafelwasser, aber auch zur Gewinnung von verschiedenen Brauchwässern ist es daher häufig erforderlich, solche Inhaltsstoffe mindestens teilweise abzutrennen.

Beispielsweise gelten für Trinkwasser gemäss der deutschen Trinkwasserverordnung vom 5. Dezember 1990 folgende Grenzwerte für die Konzentrationen an Schwermetallionen: Mangan ≤ 0,05 mg/l, Eisen ≤ 0,2 mg/l, Blei ≤ 0,04 mg/l, Kupfer ≤ 3 mg/l, Arsen ≤ 0,01 mg/l, Cadmium ≤ 0,005 mg/l, Chrom ≤ 0,05 mg/l, Nickel ≤ 0,05 mg/l, Quecksilber ≤ 0,001 mg/l. Für Blei, Kupfer und Nickel werden die Grenzwerte gemäss der ab 2003 geltenden Trinkwasserverordnung vom 21. Mai 2001 wie folgt herabgesetzt: Blei ≤ 0,01 mg/l, Kupfer ≤ 2 mg/l, Nickel ≤ 0,02 mg/l.

Es ist bereits bekannt, zur Entfernung von Schwermetallionen das Rohwasser kontinuierlich mit Ozon zu beaufschlagen, um dadurch gelöste Eisen- und/oder Mangan-Ionen zu oxidieren und in filtrierbare, in Wasser schwer- oder unlösliche Verbindungen überzuführen. Während dabei die Fe²⁺-Ionen unter Ozonzehrung vorwiegend in Eisen(III)oxidhydrat umgewandelt und an einem nachgeschalteten Kiesfilter zurückgehalten werden, werden Mn²⁺-Ionen zumindest teilweise zu löslichem Permanganat oxidiert. Um zu vermeiden, dass das behandelte Wasser Permanganat und überschüssiges Ozon enthält, ist daher ein in Strömungsrichtung nach dem Kiesfilter angeordneter Aktivkohlefilter erforderlich, an dem Permanganat zu filtrierbarem Mangandioxid reduziert und überschüssiges Ozon abgebaut wird. Im Rohwasser allenfalls vorhandener Schwefelwasserstoff wird durch Ozon überwiegend zu Sulfat oxidiert, das im Wasser verbleibt. Um ein einwandfreies, keimfreies Mineral- oder Tafelwasser zu erhalten, ist es zudem erforderlich, den Aktivkohlefilter von Zeit zu Zeit durch Rückspülen zu reinigen und in grösseren Zeitabständen auszutauschen. Neben dem dadurch bedingten Aufwand wird bei diesem Verfahren als nachteilig angesehen, dass die Ozonerzeugungsanlage für die Oxidation der Mn²⁺-Ionen relativ gross ausgelegt werden muss.

In DE 40 28 045 wurde daher vorgeschlagen, den Restozongehalt in dem zu filtrierenden Rohwasserstrom unabhängig von der Menge des injizierten Ozons so niedrig zu halten, dass eine vollständige Zehrung während der Filtration auch ohne Reduzierung durch Aktivkohle möglich ist. Dies wird dadurch erreicht, dass ein Rohwasserstrom gemäss der vorbekannten Methode mit Ozon beaufschlagt, einem Teilstrom des Rohwassers aber kein Ozon zudosiert wird, und dieser Teilstrom dem mit Ozon beaufschlagten Rohwasserstrom nach Massgabe eines vor der Filtration einzustellenden Restozongehaltes zudosiert wird. Das im Rohwasserstrom gebildete Permanganat wirkt nun als Oxidationsmittel auf die oxidierbaren Inhaltsstoffe des Teilstromes, wobei das Permanganat selbst zu Mangandioxid reduziert und im Teilstrom vorhandene Mn²⁺-Ionen zu Mangandioxid oxidiert werden. Die Abscheidung der ausgefällten Stoffe kann dann auf einem nachgeschalteten Kiesfilter oder Mehrschichtfilter erfolgen.

Ferner ist bekannt, dass Mangan(II)-Ionen unter gewissen Bedingungen mit Luftsauerstoff zu Oxidhydraten oxidiert werden, wobei unvollständig oxidierte Manganoxidhydrate auf die Oxidationsreaktion von Mangan(II)-Ionen katalysierend wirken sollen, aber die katalytische Reaktion vollständig erlischt, wenn die Oxidhydrate z.B. infolge von Sauerstoffkonzentrationen von mehr als 10 mg/l zu Mangandioxid oxidiert werden. Die Oxidation mit Luftsauerstoff ist zudem vergleichsweise langsam und pH-abhängig; Mangan(II)-Ionen werden erst ab pH-Werten von mindestens etwa 9 oxidiert werden, und selbst bei Einsatz von autokatalytisch arbeitenden Filtern sind pH-Werte über 7,8 erforderlich.

Weiterhin ist bekannt, zur Abtrennung von Schwefelwasserstoff oder Metallionen wie Eisen oder Mangan das Rohwasser durch eine Schüttung von Mangandioxid zu leiten, wobei das Mangandioxid katalytisch wirken und zur Abtrennung praktisch unbeschränkter Mengen an Verunreinigungen geeignet sein soll. Um eine katalytische Wirkung zu ermöglichen, muss jedoch ein Oxidationsmittel wie Ozon oder Chlor zum Rohwasser zudosiert werden, was insbesondere bei der Aufbereitung von Trinkwasser unerwünscht ist.

Neben diesen Methoden sind auch Verfahren bekannt geworden, in denen zur Oxidation der oxidierbaren Inhaltsstoffe oxidierend wirkende Bakterien auf einem Filtermaterial angesiedelt sind und die oxidierten Stoffe auf dem Filtermaterial abgeschieden werden.

Es wurde nun gefunden, dass sich Mangan(II)-Ionen und andere oxidierbare Inhaltsstoffe an einem Braunstein-Filter auch ohne Zudosieren eines Oxidationsmittels zum Rohwasser abtrennen lassen und dass mit den zurückgehaltenen Inhaltsstoffen beladener Braunstein durch Behandlung mit einem Oxidationsmittel regeneriert werden kann. Dadurch kann die insbesondere bei der Aufbereitung von Mineral- oder Tafelwässern unerwünschte Zugabe von Oxidationsmitteln wie Ozon oder Chlor zum zu behandelnden Wasser vermieden werden. Dank periodischer Regeneration kann die benötigte Menge an Braunstein im Vergleich zur behandelbaren Wassermenge dennoch vergleichsweise gering gehalten werden.

Die Erfindung betrifft daher ein Verfahren zur Aufbereitung von Wasser, bei welchem ein mindestens einen oxidierbaren Inhaltsstoff enthaltender Rohwasserstrom einem Filtermaterial, umfassend Braunstein mit einem Mangandioxid-Gehalt von mindestens 50 Gew.-%, zugeführt, mindestens ein Teil des mindestens einen Inhaltsstoffes aus dem Rohwasserstrom abgetrennt und auf dem Filtermaterial zurückgehalten wird und nach Durchfluss des Rohwasserstroms durch das Filtermaterial Reinwasser erhalten wird, wobei das Verfahren weiter dadurch gekennzeichnet, dass das mit dem Inhaltsstoff beladene Filtermaterial nach Unterbruch der Rohwasserzufuhr mit einer wässrigen Lösung eines Oxidationsmittels regeneriert und anschliessend zur weiteren Gewinnung von Reinwasser aus Rohwasser verwendet wird. Insbesondere betrifft die Erfindung ein solches Verfahren zur Aufbereitung von Wasser, enthaltend mindestens einen Inhaltsstoff aus der Gruppe, umfassend Schwermetalle, Arsen und Schwefelwasserstoff.

Das erfindungsgemässe Verfahren eignet sich zur Aufbereitung grundsätzlich beliebiger Wässer, wie Trinkwasser, Mineralwasser, Tafelwasser, natürliches Quellwasser oder Grundwasser, Brauwasser, Schwimmbadwasser, industrielles Brauchwasser und dergleichen. Da ein Kontakt des zu behandelnden Wassers mit Oxidationsmitteln wie Ozon oder Chlor völlig vermieden werden kann, ist es zur Aufarbeitung von Trinkwasser, insbesondere Mineral- oder Tafelwasser, besonders vorteilhaft.

Das Verfahren eignet sich insbesondere zur mindestens teilweisen Abtrennung von Schwefelwasserstoff, Arsen und/oder Schwermetallionen wie Mangan, Eisen, Blei, Kupfer, Cadmium, Chrom, Nickel und/oder Quecksilber aus Rohwässern. Besonders bevorzugt ist die Abtrennung von Schwefelwasserstoff, Mangan, Eisen, Blei, Kupfer und/oder Arsen und vor allem die Abtrennung von Schwefelwasserstoff, Mangan und/oder Arsen. Erfindungsgemäss ist insbesondere die Abtrennung von Mangan ohne Zudosieren eines Oxidationsmittels zum Rohwasser bei neutralen pH-Werten z.B. im pH-Bereich von 5 bis 7,8 möglich.

Gemäss einem bevorzugten Aspekt betrifft daher die Erfindung die Aufarbeitung von Trinkwasser, insbesondere Mineral- oder Tafelwasser, das mindestens einen der folgenden Inhaltsstoffe in einer über dem Grenzwert liegenden Konzentration enthält, um Reinwasser mit einer unterhalb des Grenzwertes dieses mindestens einen Inhaltsstoffes liegenden Konzentration zu erhalten, wobei als Inhaltsstoffe und deren Grenzwerte folgende genannt werden können: Mangan ≤ 0,05 mg/l, Eisen ≤ 0,2 mg/l, Blei ≤ 0,01 mg/l, Kupfer ≤ 2 mg/l, Arsen ≤ 0,01 mg/l, Cadmium ≤ 0,005 mg/l, Chrom ≤ 0,05 mg/l, Nickel ≤ 0,02 mg/l, Quecksilber ≤ 0,001 mg/l, Schwefelwasserstoff ≤ 0,03 mg/l.

Der Ausdruck "Braunstein" umfasst im Rahmen der vorliegenden Erfindung sowohl synthetisches Mangandioxid als auch natürliche Mangan-Mineralien, wie Pyrolusit, Manganomelane, Ramsdellit und Nsutit, deren Hauptbestandteil Mangandioxid ist. Erfindungsgemäss geeignet sind insbesondere Materialen, deren Gehalt an Mangandioxid mindestens etwa 50 Gew.-%, vorzugsweise mindestens etwa 75 Gew.-%, beträgt. Das erfindungsgemäss verwendbare Filtermaterial kann vorzugsweise aus Braunstein oder gewünschtenfalls einem Gemisch aus Braunstein mit anderen Filtermateralien wie Filtersand bestehen.

Der Ausdruck "Reinwasser" bezeichnet im Rahmen der vorliegenen Erfindung das nach Durchfluss durch das Filtermaterial erhaltene behandelte Wasser mit einer gegenüber dem zu behandelnden Rohwasser verringerten Konzentration des mindestens einen abzutrennenden Inhaltsstoffes.

Der pH-Wert des zu behandelnden Rohwassers ist nicht kritisch; beispielsweise können erfindungsgemäss auch Wässer im pH-Bereich von etwa 5 bis 9, z.B. etwa 5 bis 7,8, behandelt werden. Insbesondere eignet sich das erfindungsgemässe Verfahren auch zur mindestens teilweisen Abtrennung von Mangan aus Rohwässern mit einem pH-Wert im Bereich von 5 bis 7,8. Der pH-Wert des Wasser bleibt bei der erfindungsgemässen Behandlung im wesentlichen unverändert.

Der Braunstein hat zweckmässigerweise einen Gehalt an Mangandioxid von mindestens etwa 50 Gew.-%, vorzugsweise mindestens etwa 75 Gew.-%. Es sind sowohl synthetische und natürliche mineralische Mangandioxide geeignet, wobei aber der Einsatz von natürlichem Braunstein, der beispielsweise einen Mangandioxidgehalt von etwa 75 bis 85 Gew.-% aufweisen kann, in der Regel bevorzugt ist. Vorzugsweise wird der Braunstein in granulierter Form verwendet. Vorzugsweise kann das Granulat eine Körnung von etwa 0,1 bis 5 mm, insbesondere etwa 0,5 bis 3 mm, aufweisen.

Zur Durchführung des erfindungsgemässen Verfahrens kann das Filtermaterial vorzugsweise in Form einer Schüttung in einer mit den nötigen Zuleitungen und Ableitungen versehenen Säule oder Kolonne untergebracht sein. Gewünschtenfalls kann der Filter in Form eines Mehrschichtfilter ausgebildet sein, d.h. der Filterbehälter kann neben dem Mangandioxid-haltigen Filtermaterial weitere Filtermaterialien wie beispielsweise Filtersand enthalten.

Das Rohwasser kann von unten nach oben oder vorzugsweise oben nach unten durch das Filtermaterial geleitet werden. Gewünschtenfalls kann dem Rohwasserstrom Luft oder Sauerstoff zudosiert werden. Vorzugsweise werden jedoch dem zu behandelnden Rohwasser keine Stoffe (insbesondere keine Oxidationsmittel) oder höchstens Luft oder Sauerstoff zudosiert.

Die Fliessgeschwindigkeit des Rohwasser und die Schütthöhe des Mangandioxid-haltigen Filtermaterials sind nicht besonders kritisch. Im allgemeinen ist es jedoch bevorzugt, die Fliessgeschwindigkeit und die Schütthöhe so zu wählen, dass das Rohwasser zum Durchströmen des Mangandioxid-haltigen Filtermaterials mindestens etwa 1 Minute, vorzugsweise etwa 1 bis 20 Minuten benötigt.

Wenn die Kapazität des Filtermaterials erschöpft ist, was beispielsweise durch Messung der Konzentration des abzutrennenden Inhaltsstoffes bzw. der abzutrennenden Inhaltsstoffe im Reinwasser kontrolliert werden kann, wird das Filtermaterial mit einem Oxidationsmittel regeneriert. Vor der Regeneration kann jedoch vorzugsweise eine Rückspülung des Filtermaterials mit Wasser erfolgen, um allenfalls gebildete Schlämme auszuspülen. Zur Rückspülung wird Wasser von oben nach unten oder vorzugsweise von unten nach oben durch den Filterbehälter und das Filtermaterial geleitet, wobei hierzu grundsätzlich auch Rohwasser geeignet ist, aber vorzugsweise Reinwasser oder ein anderes Wasser, das im wesentlichen frei von oxidierbaren Inhaltsstoffen ist, eingesetzt.

Zur Regeneration des mit Wasserinhaltsstoffen beladenen Filtermaterials eignet sich vorzugsweise eine wässrige Lösung eines Oxidationsmittels mit einem Normalpotential von mindestens 1,35 V, besonders bevorzugt mindestens etwa 1,5 V, gemessen gegenüber einer Normalwasserstoffelektrode. Beispiele besonders bevorzugter Oxidationsmittel sind Ozon, Wasserstoffperoxid, Chlor und wasserlösliche Permanganate wie Kaliumpermanganat. Die Oxidationsmittelkonzentration ist nicht kritisch; beispielsweise eignen sich wässrige Lösungen, die etwa 0,01-0,50 mMol/1 Ozon, 1-20 Gew.-% Wasserstoffperoxid oder 5-20 Gew.-% Permanganat enthalten. Ganz besonders bevorzugt ist die Regeneration mit ozontem Wasser, da Ozon leicht zudosierbar ist und geeignete Ozonerzeugungsanlagen häufig bereits vorhanden sind. Zur Herstellung der wässrigen Regeneriermittellösung kann grundsätzlich auch Rohwasser oder vorzugsweise Reinwasser oder ein anderes Wasser, das im wesentlichen frei von oxidierbaren Inhaltsstoffen ist, verwendet werden.

Die als Regeneriermittellösung verwendete wässrige Lösung eines Oxidationsmittels kann von oben nach unten oder vorzugsweise von unten nach oben durch das Filtermaterial geleitet werden. Vorzugsweise kann die Regeneriermittellösung im Kreislauf durch das Filtermaterial geführt werden, um den Regeneriermittelverbrauch gering zu halten. Hierbei kann das Oxidationsmittel, beispielsweise in einer Ozonerzeugungsanlage produziertes Ozon, bzw. eine Oxidationsmittellösung vorzugsweise dem Regenerationswasserstrom kontinuierlich zudosiert werden.

Nach erfolgter Regeneration des Mangandioxid-haltigen Filtermaterials kann vorzugsweise das Filtermaterial zuerst mit Wasser gespült werden, um allfällige Rückstände an Regeneriermittellösung vollständig auszuspülen, bevor das Filtermaterial in einer weiteren Betriebsphase zur erneuten Aufbereitung von Rohwasser eingesetzt wird. Als Spülwasser kann vorzugsweise Reinwasser oder ein anderes Wasser, das im wesentlichen frei von oxidierbaren Inhaltsstoffen ist, oder gewünschtenfalls auch Rohwasser verwendet werden. Das Spülwasser kann von oben nach unten oder - um die Schüttung aufzulockern - vorzugsweise von unten nach oben durch das Filtermaterial geleitet werden.

Das erfindungsgemässe Verfahren ist somit gekennzeichnet durch abwechselnde Betriebsphasen zur Aufbereitung des Rohwassers und Regenerationsphasen zur Regeneration des Mangandioxid-haltigen Filtermaterials, wobei das Filtermaterial vorzugsweise vor und/oder nach der Regenerationsphase mit Wasser gespült werden kann.

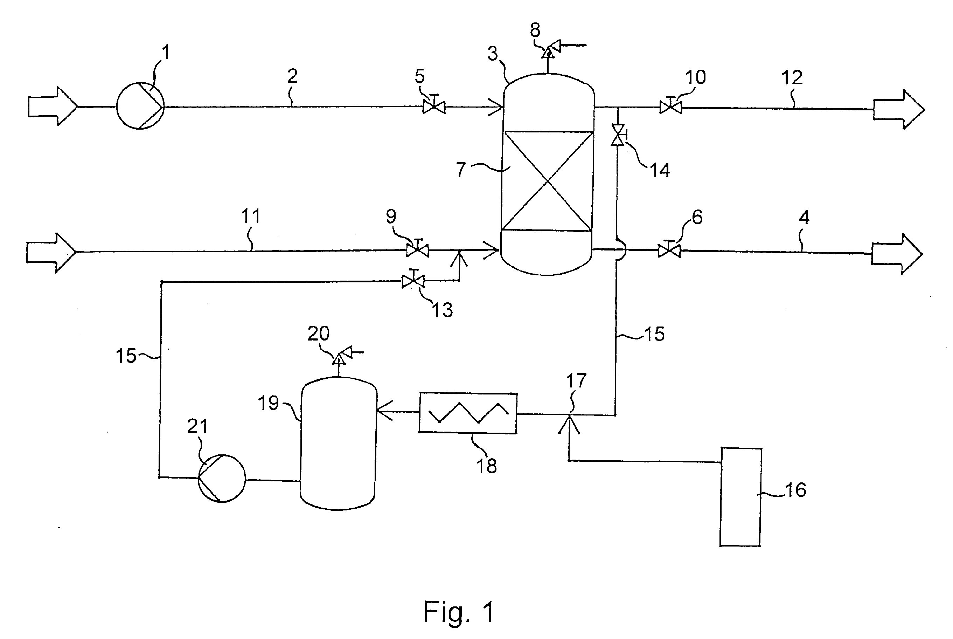

Fig. 1 zeigt in schematischer Darstellung eine bevorzugte Ausführungsform einer Wasseraufbereitungsanlage unter Verwendung von Ozon als Regeneriermittel.

In der in Fig. 1 gezeigten Wasseraufbereitungsanlage wird ein mittels einer Förderpumpe 1 geförderter Rohwasserstrom durch eine Rohwasserleitung 2 einem Filterbehälter 3 zugeführt, an dessen Auslass das Reinwasser über eine Reinwasserleitung 4, beispielsweise zur Flaschenabfüllung, abgezogen wird. Der Filterbehälter 3 enthält als Filtermaterial 7 granuliertes Mangandioxid, vorzugsweise eine natürliche mineralische Form, und ist mit einem Entgasungsventil 8 versehen, über das allenfalls freigesetzte Gase entweichen können. Gewünschtenfalls kann auch ein Mehrschichtfilter verwendet werden, das neben Mangandioxid weitere Filtermaterialien, beispielsweise Filtersand, enthält. In der gezeigten Ausführungsform fliesst das Rohwasser von oben nach unten durch den Filterbehälter 3 und das Filtermaterial 7. Hierbei sind Absperrelemente 5,6 geöffnet und die übrigen Absperrelemente 9,10,13,14 geschlossen. Die Absperrelemente 5,6,9,10,13,14 können vorzugsweise als Absperrventile ausgebildet sein. Dem Rohwasserstrom kann gewünschtenfalls Luft oder Sauerstoff zudosiert werden.

Wenn die Fähigkeit des Filtermaterials 7 zur Abtrennung von Inhaltsstoffen aus dem Rohwasser nachlässt, wird das Filtermaterial 7 regeneriert, wobei bei der Behandlung von Rohwasser allenfalls gebildeter Schlamm vorzugsweise vor der eigentlichen Regeneration durch Rückspülen mit Wasser ausgespült werden kann. Zu diesem Zweck wird bei geöffneten Absperrelementen 9,10 und geschlossenen Absperrelementen 5,6,13,14 Wasser, beispielsweise Rohwasser oder Reinwasser, das über die Spülwasserzufuhrleitung 11 zugeführt und über Spülwasserablaufleitung 12 abgezogen wird, durch den Filterbehälter 3 geleitet. In der gezeigten Anordnung fliesst das Spülwasser von unten nach oben durch den Filterbehälter 3 und das Filtermaterial 7.

Anschliessend wird das Filtermaterial 7 mit einer wässrigen Lösung eines Oxidationsmittels, beispielsweise Ozon, regeneriert, wobei die Regeneriermittellösung in der gezeigten Anordnung von unten nach oben durch den Filterbehälter 3 geleitet wird. In der in Fig. 1 dargestellten Ausführungsform wird die Regeneriermittellösung bei geöffneten Absperrelementen 13,14 und geschlossenen Absperrelementen 5,6,9,10 über eine Regeneriermittelleitung 15 im Kreislauf geführt, wobei in einer separaten Ozonerzeugungsanlage 16 produziertes Ozon an Stelle 17 z.B. mittels eines Ozon-Injektors zudosiert und das ozonte Wasser durch einen Statikmischer 18 und einen Ausgasebehälter 19 mit Entgasungsventil 20 geleitet und mittels einer Zirkulationspumpe 21 zum Filterbehälter 3 transportiert wird.

Nach erfolgter Regeneration des Filtermaterials werden Absperrelemente 13,14 geschlossen. Durch Öffnen der Absperrelemente 9,10 kann gewünschtenfalls Wasser durch den Filterbehälter 3 geleitet werden, um vorhandene Regeneriermittellösung vollständig aus der Filterbehälter 3 auszuspülen. Nach erfolgter Regeneration und allfälligem Auspülen kann in einer weiteren Betriebsphase erneut Rohwasser über Rohwasserleitung 2 zugeführt und Reinwasser gewonnen werden.

### Beispiel 1

In einer Wasseraufbereitungsanlage, wie in Fig. 1 gezeigt, wurde ein Rohwasser mit einer Konzentration an Mangan(II)-Ionen von 1,20 mg/l, einem pH-Wert von 7,4, einem Sauerstoffgehalt von 9,3 mg/l und einer Durchflussrate von 240 l/h über eine Rohwasserleitung 2 einem Filterbehälter 3 in Form einer Säule mit kreisförmigem Querschnitt und einem Innendurchmesser von 154 mm zugeführt. Der Filterbehälter 3 enthielt 28 kg natürlichen Braunstein mit einem Mangandioxid-Gehalt von etwa 80 Gew.-% und einer Körnung im Bereich von 0,8 bis 2,4 mm; die Schütthöhe betrug etwa 780 mm. Die Fliessgeschwindigkeit des Rohwassers im Filterbehälter 3 entsprach somit etwa 13 m/h und die Kontaktzeit mit dem Mangandioxid etwa 3,5 Minuten. Das behandelte Wasser wurde über eine Reinwasserleitung 4 abgezogen und von Zeit zu Zeit auf den Mangangehalt untersucht. Eine Kontrolle des pH-Werts und des Sauerstoffgehalts des behandelten Wassers nach Durchfluss von 30 1 ergab einen unveränderten pH-Wert von 7,4 und nur eine geringfügige Abnahme des Sauerstoffgehalts auf 8,7 mg/l. Wie die in Tabelle 1 zusammengestellten Daten zeigen, wurden die Manganionen nahezu vollständig aus dem Rohwasser abgetrennt, wobei die Abtrennfähigkeit anfänglich praktisch unverändert hoch blieb, aber nach Durchfluss von 20 m³ Rohwasser ein kontinuierlicher Anstieg der Mangankonzentration im behandelten Wasser festgestellt und nach Behandlung von 34 m³ der Grenzwert von 0,05 mg/l erreicht wurde.

Nach Behandlung von 37 m³ Rohwasser wurde die Rohwasserzufuhr gestoppt und zur Rückspülung des Filterbetts über eine Spülwasserzufuhrleitung 11 manganfreies Wasser mit einer Durchflussrate von 25 1/min zugeführt und von unten nach oben durch den Filterbehälter 3 geleitet. Anschliessend wurde die Rohwasserbehandlung fortgesetzt, wobei die Mangankonzentrationen im behandelten Wasser aber weiter anstieg (vgl. Tabelle 1). Erneute Rückspülung des Filterbetts, aber unter gleichzeitiger Zufuhr von Luft, und anschliessende Wiederaufnahme der Rohwasserbehandlung hatte ebenfalls keinen Einfluss auf die Abtrennfähigkeit des Filtermaterials 7, sondern führte zu weiter ansteigenden Manganwerten im behandelten Wasser. Blosse Rückspülung mit Wasser allein oder in Kombination mit der Zufuhr von Luftsauerstoff ist somit zur Regeneration des Filtermaterials offensichtlich nicht geeignet.

Danach wurde mehrere Stunden lang ozonhaltiges Wasser über das Filtermaterial 7 zirkuliert, indem Wasser mit einer Fliessgeschwindigkeit von etwa 2 m³/h über Regeneriermittelleitung 15 im Kreislauf geführt und mittels einer Ozonerzeugungsanlage 16 Ozon in einer Menge von etwa 10 g/h produziert und zum zirkulierenden Wasser zudosiert wurde. Anschliessend wurde durch Rückspülung mit Wasser das ozonhaltige Wasser aus dem Filtersystem herausgespült und dann in einer weiteren Betriebsphase die Behandlung von Rohwasser fortgesetzt, wobei wieder die ursprüngliche hohe Abtrennfähigkeit des Filtermaterials erreicht wurde (vgl. Tabelle 1).

**Tabelle 1**

| Mangangehalt des behandelten Wassers | |
|---|---|
| Mangangehalt [mg/l] | Wasserzählerstand [m³] |
| 0,002 | 0,03 |
| 0,001 | 0,05 |
| 0,001 | 0,10 |
| 0,001 | 1,00 |
| 0,001 | 10,00 |
| 0,001 | 20,00 |
| 0,007 | 25,00 |
| 0,021 | 30,00 |
| 0,032 | 33,00 |
| 0,050 | 34,04 |
| 0,102 | 37,00 |

| nach Rückspülung mit Wasser: | |
|---|---|
| 0,103 | 37,03 |
| 0,109 | 37,20 |

| nach Rückspülung mit Luft + Wasser: | |
|---|---|
| 0,110 | 37,23 |
| 0,119 | 37,40 |

| nach Regeneration mit Ozon: | |
|---|---|
| 0,001 | 37,43 |
| 0,001 | 37,60 |
| 0,050 | 67,52 |

## Patentansprüche

1. Verfahren zur Aufbereitung von Wasser, bei welchem ein mindestens einen oxidierbaren Inhaltsstoff enthaltender Rohwasserstrom einem Filtermaterial (7), umfassend Braunstein mit einem Mangandioxid-Gehalt von mindestens 50 Gew.-%, zugeführt, mindestens ein Teil des mindestens einen Inhaltsstoffes aus dem Rohwasserstrom abgetrennt und auf dem Filtermaterial (7) zurückgehalten wird und nach Durchfluss des Rohwasserstroms durch das Filtermaterial (7) Reinwasser erhalten wird, **dadurch gekennzeichnet, dass** das mit dem Inhaltsstoff beladene Filtermaterial (7) nach Unterbruch der Rohwasserzufuhr mit einer wässrigen Lösung eines Oxidationsmittel regeneriert und anschliessend zur weiteren Gewinnung von Reinwasser aus Rohwasser verwendet wird.

2. Verfahren zur Aufbereitung von Wasser, bei welchem ein Rohwasserstrom, enthaltend mindestens einen Inhaltsstoff aus der Gruppe, umfassend Schwermetalle, Arsen und Schwefelwasserstoff, einem Filtermaterial (7), umfassend Braunstein mit einem Mangandioxid-Gehalt von mindestens 50 Gew.-%, zugeführt, mindestens ein Teil des mindestens einen Inhaltsstoffes aus dem Rohwasserstrom abgetrennt und auf dem Filtermaterial (7) zurückgehalten wird und nach Durchfluss des Rohwasserstroms durch das Filtermaterial (7) Reinwasser erhalten wird, **dadurch gekennzeichnet, dass** das mit dem Inhaltsstoff beladene Filtermaterial (7) nach Unterbruch der Rohwasserzufuhr mit einer wässrigen Lösung eines Oxidationsmittel regeneriert und anschliessend zur weiteren Gewinnung von Reinwasser aus Rohwasser verwendet wird.

3. Verfahren nach Anspruch 1 oder 2, worin der Braunstein einen Gehalt an Mangandioxid von mindestens 75 Gew.-% aufweist.

4. Verfahren nach einem der Ansprüche 1 bis 3, worin der Braunstein eine natürliche mineralische Form von Mangandioxid ist.

5. Verfahren nach einem der Ansprüche 1 bis 4, worin der Braunstein in Form eines Granulats vorliegt.

6. Verfahren nach einem der Ansprüche 1 bis 5, worin der Braunstein eine Körnung von 0,1 bis 5 mm, vorzugsweise 0,5 bis 3 mm, aufweist.

7. Verfahren nach einem der Ansprüche 1 bis 6, worin das Filtermaterial (7) in Form einer Schüttung vorliegt und in einem Filterbehälter (3) in Form einer Säule untergebracht ist.

8. Verfahren nach Anspruch 7, worin der Filterbehälter (3) zusätzlich Filtersand enthält.

9. Verfahren nach einem der Ansprüche 1 bis 8, worin das Oxidationsmittel ein Normalpotential von mindestens 1,35 V, vorzugsweise mindestens etwa 1,5 V, gemessen gegenüber einer Normalwasserstoffelektrode, aufweist.

10. Verfahren nach einem der Ansprüche 1 bis 9, worin das Oxidationsmittel Ozon, Wasserstoffperoxid, Chlor oder ein wasserlösliches Permanganat, vorzugsweise Ozon, ist.

11. Verfahren nach einem der Ansprüche 1 bis 10, worin die wässrige Oxidationsmittellösung in einem Kreislauf durch das Filtermaterial (7) geführt wird.

12. Verfahren nach einem der Ansprüche 1 bis 11, zur Aufbereitung von Trinkwasser, insbesondere Mineral- oder Tafelwasser.

13. Verfahren nach einem der Ansprüche 1 bis 12, worin der mindestens eine Inhaltsstoff Schwefelwasserstoff, Arsen, Mangan, Eisen, Blei, Kupfer, Cadmium, Chrom, Nickel und/oder Quecksilber ist.

14. Verfahren nach einem der Ansprüche 1 bis 13, worin der mindestens eine Inhaltsstoff Schwefelwasserstoff, Arsen, Mangan, Eisen, Blei und/oder Kupfer, vorzugsweise Schwefelwasserstoff, Arsen und/oder Mangan, ist.

15. Verfahren nach einem der Ansprüche 1 bis 14, worin der mindestens eine Inhaltsstoff Mangan ist.

16. Verfahren nach einem der Ansprüche 1 bis 15, worin das Rohwasser einen pH-Wert im Bereich von 5 bis 9 aufweist.

17. Verfahren nach einem der Ansprüche 1 bis 16, worin das Rohwasser einen pH-Wert im Bereich von 5 bis 7,8 aufweist und der mindestens eine Inhaltsstoff Mangan ist.

18. Verfahren nach einem der Ansprüche 1 bis 17, worin das Rohwasser oben nach unten durch das Filtermaterial (7) geleitet wird.

19. Verfahren nach einem der Ansprüche 1 bis 18, worin dem Rohwasserstrom Luft oder Sauerstoff zudosiert wird.

20. Verfahren nach einem der Ansprüche 1 bis 19, worin das Rohwasser zum Durchströmen des Filtermaterials (7) mindestens 1 Minute, vorzugsweise 1 bis 20 Minuten, benötigt.

21. Verfahren nach einem der Ansprüche 1 bis 20, worin die wässrige Oxidationsmittellösung von von unten nach oben durch das Filtermaterial geleitet wird.

22. Verfahren nach einem der Ansprüche 1 bis 21, worin das Filtermaterial (7) vor der Regeneration mit Wasser rückgespült wird.

23. Verfahren nach Anspruch 22, worin das Wasser von unten nach oben durch das Filtermaterial (7) geleitet wird.

24. Verfahren nach einem der Ansprüche 1 bis 23, worin das Filtermaterial (7) nach der Regeneration mit Wasser rückgespült wird.

25. Verfahren nach Anspruch 24, worin das Wasser von unten nach oben durch das Filtermaterial (7) geleitet wird.
